# EUROPEAN PATENT SPECIFICATION

(11) **EP 3 112 186 B1**
(45) Date of publication and mention of the grant of the patent: **30.01.2019**
(21) Application number: 14883961.6
(22) Date of filing: 25.12.2014
(51) Int. Cl.: B60C 11/03, B60C 5/00

(54) **PNEUMATIC TIRE**
LUFTREIFEN
BANDAGE PNEUMATIQUE

(30) Priority: 26.02.2014 JP 2014035647
(43) Date of publication of application: 04.01.2017
(73) Proprietor: The Yokohama Rubber Co., Ltd., Minato-ku Tokyo 105-8685 (JP)
(72) Inventor: YAEGASHI,Tsuyoshi, Hiratsuka-shi Kanagawa 254-8601 (JP)
(74) Representative: Dilg, Haeusler, Schindelmann Patentanwaltsgesellschaft mbH
(86) International application number: PCT/JP2014/084420
(87) International publication number: WO 2015/129139

(56) References cited:
- EP-A1- 2 151 333
- DE-U1-202008 008 298
- JP-A- 2002 225 511
- JP-A- 2010 132 181
- JP-A- 2010 132 181
- JP-A- 2012 158 233
- US-A1- 2006 005 904
- US-A1- 2010 108 214

## Description

### TECHNICAL FIELD

The present invention relates to a pneumatic tire suitable for rallying, and more specifically relates to a pneumatic tire that is capable of improving wet performance, dry performance, and uneven wear performance in a well-balanced manner.

### BACKGROUND

As a pneumatic tire used for rallying that takes place on a tarmac road surface (paved road), a pneumatic tire has been proposed in which a plurality of both-end closed lug grooves is provided in a tread portion with the lug grooves being disposed over the entire area of the tread portion (refer to Patent Documents 1 and 2, for example).

With respect to this type of pneumatic tire, in recent years, as vehicle performance improves, there is a strong demand to improve the dry performance, as represented by the steering stability on dry road surfaces, and the wet performance, as represented by the steering stability on wet road surfaces, in a well-balanced manner to a high degree.

Attention is drawn to the disclosure of JP2002225511-A and to JP2010132181-A.

However, when lug groove components are added to achieve a superior wet performance, a problem arises in which not only the dry performance, but also the uneven wear resistance deteriorate. In particular, in a driving environment like rally driving, it is necessary to maintain good uneven wear resistance as well as improve the wet performance and the dry performance. Thus, a conventional tread pattern is not necessarily considered to be sufficient.

### PRIOR ART DOCUMENT

### Patent Document

Patent Document 1: Japanese Unexamined Patent Application Publication No. 2012-158233A
Patent Document 2: Japanese Unexamined Patent Application Publication No. 2012-218515A

### SUMMARY OF THE INVENTION

### Problem to be Solved by the Invention

An object of the present invention is to provide a pneumatic tire that is capable of improving wet performance, dry performance, and uneven wear resistance in a well-balanced manner.

### Means to Solve the Problem

In order to achieve the above-described object, a pneumatic tire according to the present invention, where a mounting direction is designated when the tire is mounted on a vehicle, includes an annular-shaped tread portion extending in a tire circumferential direction, a pair of side wall portions disposed on both sides of the tread portion, and a pair of bead portions disposed on an inner side in a tire radial direction of the side wall portions.

A first main groove that extends in the tire circumferential direction is provided in a center region of the tread portion, and a second main groove that extends in the tire circumferential direction is provided in a region further to an inner side of the vehicle than a tire equatorial position of the tread portion. A distance GL1 from a center position of the first main groove to the tire equatorial position is set so as to be 6% or less of a half-width TL/2 of a tire ground contact width TL, and a distance GL2 from a center position of the second main groove to the tire equatorial position is set so as to be from 40% to 65% of the half-width TL/2 of the tire ground contact width TL. A first rib is defined further to the inner side of the vehicle than the second main groove, a second rib is defined between the second main groove and the first main groove, and a third rib is defined further to an outer side of the vehicle than the first main groove.

At the same time, a plurality of first lug grooves, a plurality of second lug grooves, a plurality of third lug grooves, a plurality of fourth lug grooves, and a plurality of fifth lug grooves are provided in the tread portion. Each of the first lug grooves is positioned between a ground contact edge on the inner side of the vehicle and the second main groove and both ends thereof are closed within the first rib. One end of each of the second lug grooves is communicated with the second main groove and the other end thereof is closed within one of the first rib and the second rib. One end of each of the third lug grooves is communicated with the first main groove and the other end thereof is closed within one of the second rib and the third rib. Each of the fourth lug grooves is positioned between a ground contact edge on the outer side of the vehicle and the first main groove and both ends thereof are closed within the third rib. Each of the fifth lug grooves is positioned between the ground contact edge on the outer side of the vehicle and the fourth lug groove and both ends thereof are closed within the third rib.

### EFFECT OF THE INVENTION

In the pneumatic tire for which the mounting direction is designated when the tire is mounted on a vehicle of the present invention, the first main groove is disposed in the center region of the tread portion, the second main groove is disposed in the region further to the inner side of the vehicle than the tire equatorial position of the tread portion, and the first lug grooves to the fifth lug grooves are disposed in the tread portion in a distributed manner. As a result, it is possible to maintain good wet performance. Furthermore, as a result of closing the ends of the first lug grooves to the fifth lug grooves, a structure is obtained in which the first rib to the third rib are not fragmented. In particular, since the both-end closed fourth lug grooves and fifth lug grooves are disposed instead of circumferential grooves in the region further to the outer side of the vehicle than the tire equatorial position of the tread portion, this type of structure significantly contributes to improving steering stability on dry road surfaces and to suppressing uneven wear. As a result, according to the above-described structure, it is possible to improve the wet performance, as represented by the steering stability on wet road surfaces, the dry performance, as represented by the steering stability on dry road surfaces, and uneven wear resistance in a well-balanced manner.

In the present invention, it is preferable to provide a plurality of sixth lug grooves, each of the sixth lug grooves being positioned between the ground contact edge on the outer side of the vehicle and the fifth lug groove and both ends thereof being closed within the third rib. These sixth lug grooves can be added as desired in accordance with the tire dimensions and required characteristics, and fulfill a similar role to that of the fourth lug grooves and the fifth lug grooves.

The second lug grooves and the third lug grooves are preferably open toward the inner side of the vehicle. In this manner, rigidity of the second rib and the third rib is maintained with respect to the input from the outer side of the vehicle, and it is thus possible to improve the steering stability on dry road surfaces.

It is preferable that a distance RG1 from the second main groove to a closed end of the first lug groove on the tire equator side be set to be from 15% to 35% of a width RL1 of the first rib within a ground contact region, and that a distance RG2 from the second main groove to a closed end of the second lug groove be set to be from 30% to 65% of a width RL2 of the second rib. It is preferable that a distance RG3 from the first main groove to a closed end of the third lug groove be set to be from 15% to 35% of a width RL3 of the third rib within the tire ground contact region, and that a distance RG4 from the first main groove to a closed end of the fourth lug groove on the outer side of the vehicle be set to be from 35% to 55% of the width RL3 of the third rib within the tire ground contact region. It is preferable that a distance RG5 from the first main groove to a closed end of the fifth lug groove on the outer side of the vehicle be set to be from 65% to 80% of the width RL3 of the third rib within the tire ground contact region, and that a distance RG6 from the first main groove to a closed end of the sixth lug groove on the outer side of the vehicle be set to be from 80% to 95% of the width RL3 of the third rib within the tire ground contact region. As a result, it is possible to improve the wet performance, dry performance, and uneven wear resistance in a well-balanced manner.

It is preferable that an inclination angle α1 of the first lug groove with respect to the tire circumferential direction be set to be from 70° to 90°, and that inclination angles α2 and α3 of the second lug groove and the third lug groove with respect to the tire circumferential direction be respectively set to be from 45° to 80°. It is preferable that inclination angles α4, α5, and α6 of the fourth lug groove, the fifth lug groove, and the sixth lug groove with respect to the tire circumferential direction be respectively set to be from 50° to 85°. As a result, it is possible to improve the wet performance, dry performance, and uneven wear resistance in a well-balanced manner.

It is preferable that groove widths GW1 and GW2 of the first main groove and the second main groove be respectively set to be from 7 mm to 17 mm, and that groove depths of the first main groove and the second main groove be set to be from 5.5 mm to 7 mm. As a result, it is possible to improve the dry performance and the wet performance in a well-balanced manner.

It is preferable that a groove surface area ratio of the tread portion be in a range from 17% to 27%. As a result, it is possible to improve the dry performance and the wet performance in a well-balanced manner.

It is preferable that each of the first lug grooves to sixth lug grooves be curved and that a curvature radius of each of the first lug grooves to sixth lug grooves be set to be from 8 mm to 200 mm, respectively. By curving each of the lug grooves in this manner, a force applied to the lug grooves, which are susceptible to damage when braking/driving or when turning, is distributed, and it is thus possible to avoid uneven wear.

It is preferable that the first lug grooves and the second lug grooves be disposed alternately along the tire circumferential direction, and that the second lug grooves and the third lug grooves be disposed alternately along the tire circumferential direction. It is preferable that the third lug grooves and the fourth lug grooves be disposed alternately along the tire circumferential direction, that the fourth lug grooves and the fifth lug grooves be disposed alternately along the tire circumferential direction, and that the fifth lug grooves and the sixth lug grooves be disposed alternately along the tire circumferential direction. By disposing the adjacent lug grooves in a staggered manner in this manner, it is possible to make uniform the rigidity balance of the tread portion, and as a result, to improve the dry performance and uneven wear in a well-balanced manner.

It is preferable that each of the closed ends of the first lug grooves to sixth lug grooves be curved and that the curvature radius of each of the closed ends be from 3 mm to 10 mm. As a result, the force applied to the lug grooves, which are susceptible to damage when braking/driving or when turning, is distributed, and it is thus possible to avoid uneven wear.

It is preferable that the first lug grooves and the sixth lug grooves be shallower than the second lug grooves to the fifth lug grooves, respectively. By making the first lug grooves and the sixth lug grooves that are positioned in shoulder regions of the tread portion shallower, it is possible to improve the steering stability on dry road surfaces and further to improve the uneven wear resistance.

In the present invention, each dimension is measured with the tire assembled onto a regular rim and filled with a regular inner pressure. A "regular rim" is a rim defined by a standard for each tire according to a system of standards that includes standards on which tires are based, and refers to a "standard rim" in the case of JATMA, refers to a "design rim" in the case of TRA, and refers to a "measuring rim" in the case of ETRTO. "Regular inner pressure" is the air pressure defined by standards for each tire according to a system of standards that includes standards on which tires are based, and refers to a "maximum air pressure" in the case of JATMA, refers to the maximum value in the table of "TIRE ROAD LIMITS AT VARIOUS COLD INFLATION PRESSURES" in the case of TRA, and refers to the "inflation pressure" in the case of ETRTO. "Regular inner pressure" is 180 kPa for a tire on a passenger vehicle.

In the present invention, a tire ground contact width TL is defined as 85% of a tire cross-sectional width T, as measured under the above-described measurement conditions. A groove surface area ratio is a groove surface area ratio inside a ground contact region prescribed by the tire ground contact width TL. The groove surface area ratio is a ratio (%) of a total area of groove portions inside the ground contact region with respect to a total area (including land portions and the groove portions) of the ground contact region.

### BRIEF DESCRIPTION OF THE DRAWINGS

FIG. 1 is a perspective view illustrating a pneumatic tire according to an embodiment of the present invention.
FIG. 2 is a front view illustrating the pneumatic tire in FIG. 1.
FIG. 3 is a meridian cross-sectional view illustrating the pneumatic tire in FIG. 1.
FIG. 4 is a development view illustrating a tread pattern of the pneumatic tire in FIG. 1.
FIG. 5 is a development view illustrating the tread pattern of a pneumatic tire of a conventional example.
FIG. 6 is a development view illustrating the tread pattern of a pneumatic tire of a comparative example.

### BEST MODE FOR CARRYING OUT THE INVENTION

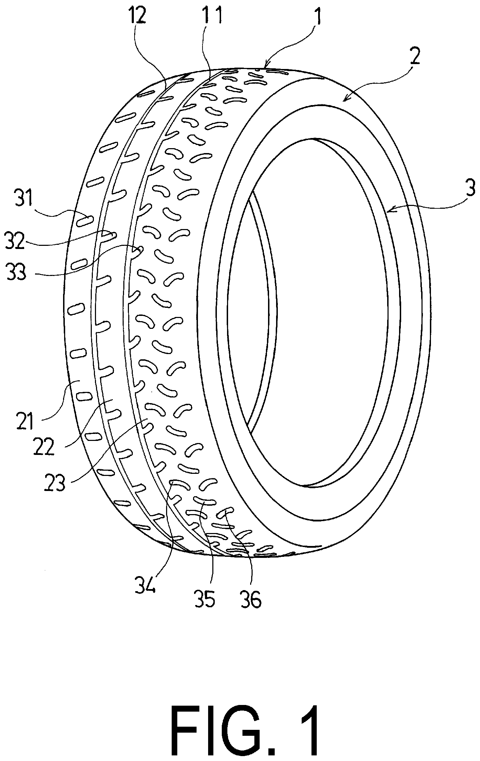

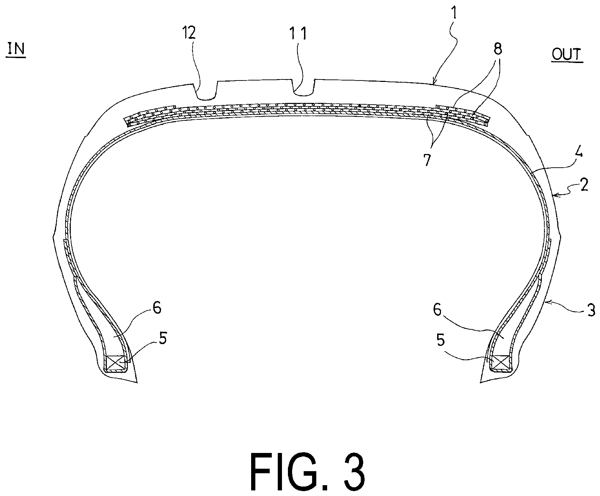

A detailed description of the configuration of the present invention is given below, with reference to the accompanying drawings. FIGS. 1 to 4 illustrate a pneumatic tire according to an embodiment of the present invention. The pneumatic tire is a tire having a designated tire front/back mounting direction when mounted on a vehicle. In FIGS. 1 to 4, IN corresponds to an inner side of a vehicle when the pneumatic tire is mounted on the vehicle and OUT corresponds to an outer side of a vehicle when the pneumatic tire is mounted on the vehicle. Such a mounting direction is indicated in a desired section on an outer surface of the tire.

As illustrated in FIGS. 1 to 3, the pneumatic tire according to the present embodiment is provided with an annular-shaped tread portion 1 extending in the tire circumferential direction, a pair of side wall portions 2,2 disposed on both sides of the tread portion 1, and a pair of bead portions 3,3 disposed on an inner side of the side wall portion 2 in the tire radial direction.

A carcass layer 4 is mounted between the pair of bead portions 3,3. The carcass layer 4 includes a plurality of reinforcing cords extending in the tire radial direction, and is folded back around a bead core 5 disposed in each of the bead portions 3 from a tire inner side to a tire outer side. A bead filler 6 having a triangular cross-sectional shape formed from rubber composition is disposed on a periphery of the bead core 5.

Meanwhile, a plurality of layers of a belt layer 7 is embedded on an outer circumferential side of the carcass layer 4 in the tread portion 1. These belt layers 7 include a plurality of reinforcing cords that incline with respect to the tire circumferential direction and are disposed with the reinforcing cords of different layers intersecting each other. In the belt layers 7, an inclination angle of the reinforcing cords with respect to the tire circumferential direction is set in a range from, for example, 10° to 40°. Steel cords are preferably used as the reinforcing cords of the belt layers 7. For the purpose of enhancing high-speed durability, at least one layer of a belt cover layer 8 formed by arranging reinforcing cords at an angle of, for example, not more than 5° with respect to the tire circumferential direction, is disposed on an outer circumferential side of the belt layers 7. Nylon, aramid, or similar organic fiber cords are preferably used as the reinforcing cords of the belt cover layer 8.

Note that the tire internal structure described above is exemplary of a pneumatic tire, but is not limited thereto.

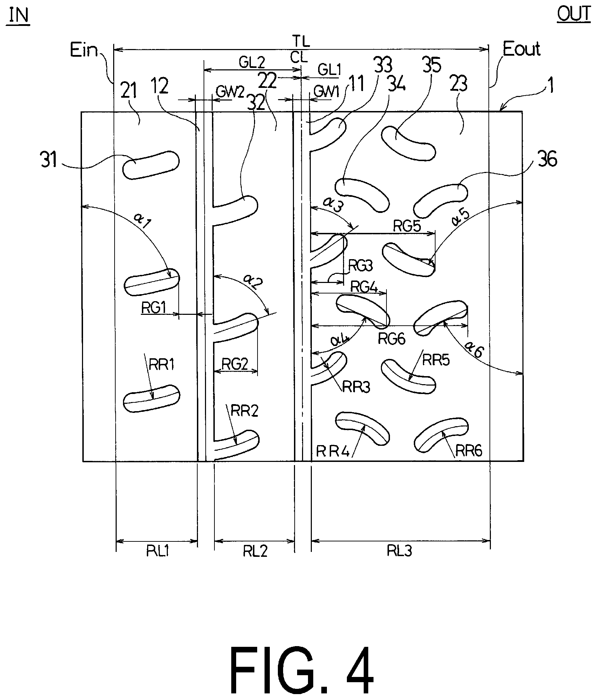

As illustrated in FIG. 4, a first main groove 11 extending in the tire circumferential direction is formed in a center region of the tread portion 1, and a second main groove 12 extending in the tire circumferential direction is formed in a region further to an inner side of the vehicle than a tire equatorial position CL of the tread portion 1.

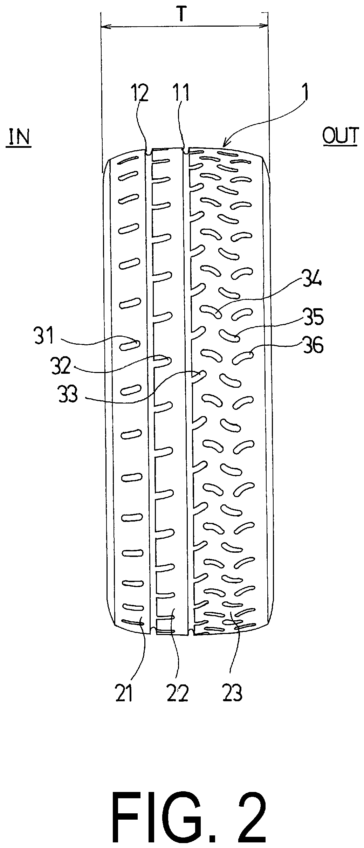

When a tire ground contact width TL is set to 85% of a tire cross-sectional width T (refer to FIG. 2), a distance GL1 from a center position of the first main groove 11 to the tire equatorial position CL is set so as to be 6% or less of a half-width TL/2 of the tire ground contact width TL, and a distance GL2 from a center position of the first main groove 11 to the tire equatorial position CL is set so as to be from 40% to 65% of the half-width TL/2 of the tire ground contact width TL. As a result, a first rib 21 is defined further to the inner side of the vehicle than the second main groove 12, a second rib 22 is defined between the second main groove 12 and the first main groove 11, and a third rib 23 is defined further to the outer side of the vehicle than the first main groove 11.

Further, in the tread portion 1, a plurality of first lug grooves 31, a plurality of second lug grooves 32, a plurality of third lug grooves 33, a plurality of fourth lug grooves 34, a plurality of fifth lug grooves 35, and a plurality of sixth lug grooves 36 are formed respectively along the tire circumferential direction while having an interval therebetween. Each of the first lug grooves 31 is positioned between a ground contact edge Ein on the inner side of the vehicle and the second main groove 12 and has a structure in which both ends of the first lug groove 31 are closed within the first rib 21. Each of the second lug grooves 32 has a structure in which one end thereof is communicated with the second main groove 12 and the other end thereof is closed within the second rib 22. Each of the third lug grooves 33 has a structure in which one end thereof is communicated with the first main groove 11 and the other end thereof is closed within the third rib 23. Each of the fourth lug grooves 34 is positioned between a ground contact edge Eout on the outer side of the vehicle and the first main groove 11 and has a structure in which both ends of the fourth lug groove 34 are closed within the third rib 23. Each of the fifth lug grooves 35 is positioned between the ground contact edge Eout on the outer side of the vehicle and the fourth lug groove 34 and has a structure in which both ends of the fifth lug groove 35 are closed within the third rib 23. Each of the sixth lug grooves 36 is positioned between the ground contact edge Eout on the outer side of the vehicle and the fifth lug groove 35 and has a structure in which both ends of the sixth lug groove 36 are closed within the third rib 23. The groove width and the groove depth of the lug grooves 31 to 36 are not particularly limited, and the groove width may be set to a value from 5 mm to 15 mm and the groove depth may be set to a value from 1 mm to 8 mm, for example.

In the above-described pneumatic tire, the first main groove 11 is disposed in the center region of the tread portion 1, the second main groove 12 is disposed in the region further to the inner side of the vehicle than the tire equatorial position CL of the tread portion 1, and further, the lug grooves 31 to 36 are disposed in the tread portion 1 in a distributed manner. As a result, it is possible to maintain good wet performance. Furthermore, since, as a result of closing the ends of the lug grooves 31 to 36, a structure is obtained in which the ribs 21 to 23 are not fragmented, and since the both-end closed lug grooves 34 and 35 are disposed instead of circumferential grooves particularly in the region further to the outer side of the vehicle than the tire equatorial position CL of the tread portion 1, this type of structure significantly contributes to improving steering stability on dry road surfaces and to suppressing uneven wear. As a result, with the pneumatic tire having the above-described tread pattern, it is possible to improve wet performance, dry performance, and uneven wear resistance in a well-balanced manner.

Here, when the distance GL1 from the center position of the first main groove 11 to the tire equatorial position CL is greater than 6% of the half-width TL/2 of the tire ground contact width TL, the wet performance deteriorates. The distance GL1 of the first main groove 11 is preferably equal to or less than 3% of the half-width TL/2 of the tire ground contact width TL. In particular, in order to achieve good wet performance, it is desirable that the first main groove 11 is disposed at a position that overlaps with the tire equatorial position CL. Note that the first main groove 11 may be displaced either toward the inner side of the vehicle or the outer side of the vehicle with respect to the tire equatorial position CL.

Further, when the distance GL2 from the center position of the second main groove 12 to the tire equatorial position CL is less than 40% of the half-width TL/2 of the tire ground contact width TL, rigidity of the second rib 22 deteriorates, which results in degrading of steering stability and uneven wear resistance. On the other hand, when the distance GL2 is greater than 65% thereof, rigidity of the first rib 21 deteriorates, which results in degrading of steering stability and uneven wear resistance.

In the above-described pneumatic tire, only one end of the second lug groove 32 is required to be communicated with the second main groove 12, and it is possible to close the other end thereof within the first rib 21 or within the second rib 22. Similarly, only one end of the third lug groove 33 is required to be communicated with the first main groove 11, and it is possible to close the other end thereof within the second rib 22 or within the third rib 23. However, as illustrated in the drawings, the second lug groove 32 and the third lug groove 33 are preferably open toward the inner side of the vehicle. As a result, rigidity of the second rib 22 and the third rib 23 is maintained with respect to the input from the outer side of the vehicle, and it is thus possible to improve the steering stability on dry road surfaces.

In FIG. 4, a distance RG1 from the second main groove 12 to a closed end of the first lug groove 31 on the tire equator side is set to be in a range from 15% to 35% of a width RL1 of the first rib 21 within the ground contact region. A distance RG2 from the second main groove 12 to a closed end of the second lug groove 32 is set to be in a range from 30% to 65% of a width RL2 of the second rib 22. A distance RG3 from the first main groove 11 to a closed end of the third lug groove 33 is set to be in a range from 15% to 35% of a width RL3 of the third rib 23 within the tire ground contact region. A distance RG4 from the first main groove 11 to a closed end of the fourth lug groove 33 on the outer side of the vehicle is set to be in a range from 35% to 55% of the width RL3 of the third rib 23 within the tire ground contact region. A distance RG5 from the first main groove 11 to a closed end of the fifth lug groove 35 on the outer side of the vehicle is set to be in a range from 65% to 80% of the width RL3 of the third rib 23 within the tire ground contact region. A distance RG6 from the first main groove 11 to a closed end of the sixth lug groove 36 on the outer side of the vehicle is set to be in a range from 80% to 95% of the width RL3 of the third rib 23 within the tire ground contact region. As a result, it is possible to improve the wet performance, dry performance, and uneven wear resistance in a well-balanced manner.

Here, when the distance RG1 from the second main groove 12 to the closed end of the first lug groove 31 on the tire equator side is less than 15% of the width RL1 of the first rib 21, as the first lug groove 31 comes close to the second main groove 12, rigidity deteriorates, and then, it becomes more likely that uneven wear is generated. Whereas, when the distance RG1 is greater than 35% thereof, water discharge properties deteriorate. In particular, the distance RG1 is preferably set to be from 20% to 30% of the width RL1 of the first rib 21.

When the distance RG2 from the second main groove 12 to the closed end of the second lug groove 32 is less than 30% of the width RL2 of the second rib 22, the wet performance deteriorates. Whereas, when the distance RG2 is greater than 65% thereof, as the second lug groove 32 comes close to the first main groove 11, rigidity deteriorates, and then, the dry performance deteriorates. As a result, it becomes more likely that uneven wear is generated.

When the distance RG3 from the first main groove 11 to the closed end of the third lug groove 33 is less than 15% of the width RL3 of the third rib 23, the wet performance deteriorates. Whereas, when the distance RG3 is greater than 35% thereof, rigidity of the third rib 23 decreases too much, and then the steering stability on dry road surfaces deteriorates.

When the distance RG4 from the first main groove 11 to the closed end of the fourth lug groove 34 on the outer side of the vehicle is less than 35% of the width RL3 of the third rib 23, the wet performance deteriorates. Whereas, when the distance RG4 is greater than 55% thereof, rigidity of the third rib 23 decreases too much, and then the steering stability on dry road surfaces deteriorates.

When the distance RG5 from the first main groove 11 to the closed end of the fifth lug groove 35 on the outer side of the vehicle is less than 65% of the width RL3 of the third rib 23, the wet performance deteriorates. Whereas, when the distance RG5 is greater than 80% thereof, rigidity of the third rib 23 decreases too much, and then the steering stability on dry road surfaces deteriorates.

When the distance RG6 from the first main groove 11 to the closed end of the sixth lug groove 36 on the outer side of the vehicle is less than 80% of the width RL3 of the third rib 23, the wet performance deteriorates. Whereas, when the distance RG6 is greater than 95% thereof, rigidity of the third rib 23 decreases too much, and then the steering stability on dry road surfaces deteriorates.

In FIG. 4, an inclination angle α1 of the first lug groove 31 with respect to the tire circumferential direction is set to be in a range from 70° to 90°. Inclination angles α2 and α3 of the second lug groove 32 and the third lug groove 33 with respect to the tire circumferential direction are respectively set to be in a range from 45° to 80°. Inclination angles α4, α5, and α6 of the fourth lug groove 34, the fifth lug groove 35, and the sixth lug groove 36 with respect to the tire circumferential direction are respectively set to be in a range from 50° to 85°. As a result, it is possible to improve the wet performance, dry performance, and uneven wear resistance in a well-balanced manner. Note that the inclination angles α1 to α6 are inclination angles of straight lines, which connect center positions of groove widths at both ends, with respect to the tire circumferential direction in the first lug groove 31 to the sixth lug groove 36, respectively.

Here, when the inclination angle α1 of the first lug groove 31 with respect to tire circumferential direction is smaller than 70°, it becomes more likely that uneven wear is generated. In particular, the inclination angle α1 is preferably from 75° to 85°. When the inclination angles α2 and α3 of the second lug groove 32 and the third lug groove 33 with respect to tire circumferential direction are smaller than 45°, it becomes more likely that uneven wear is generated. When the inclination angles α4, α5, and α6 of the fourth lug groove 34, the fifth lug groove 35, and the sixth lug groove 36 with respect to tire circumferential direction are smaller than 50°, as rigidity with respect to a lateral force generated when cornering deteriorates, the steering stability on dry road surfaces deteriorates. Whereas, when the inclination angles α4, α5, and α6 are larger than 85°, it becomes more likely that uneven wear is generated when braking/driving on dry road surfaces.

In the above-described pneumatic tire, groove widths GW1 and GW2 of the first main groove 11 and the second main groove 12 are respectively set to be from 7 mm to 17 mm, and groove depths of the first main groove and the second main groove are preferably set to be from 5.5 mm to 7 mm. As a result, it is possible to improve the dry performance and the wet performance in a well-balanced manner.

Here, when the groove widths GW1 and GW2 of the first main groove 11 and the second main groove 12 are smaller than 7 mm, water drainage properties deteriorate. Whereas, when the groove widths GW1 and GW2 are larger than 17 mm, it becomes more likely that the lateral force generated when cornering causes buckling to occur in the tread portion 1 at the positions of the first main groove 11 and the second main groove 12. Further, the groove depths of the first main groove 11 and the second main groove 12 are preferably from 5.5 mm to 7 mm. When the groove depths are smaller than 5.5 mm, the wet performance deteriorates. Whereas, when the groove depths are larger than 7 mm, the steering stability deteriorates. In particular, the groove depths of the first main groove 11 and the second main groove 12 are preferably from 5.5 mm to 6.5 mm.

In the above-described pneumatic tire, a groove surface area ratio of the tread portion 1 is preferably in a range from 17% to 27%. As a result, it is possible to improve the dry performance and the wet performance in a well-balanced manner. Here, when the groove surface area ratio of the tread portion 1 is less than 17%, the wet performance deteriorates. Whereas, the groove surface area ratio is greater than 27%, the dry performance deteriorates.

Furthermore, each of the first lug grooves 31 to sixth lug grooves 36 is preferably a curved groove. Then, curvature radii RR1, RR2, RR3, RR4, RR5, and RR6 of the first lug groove 31 to the sixth lug groove 36 are preferably from 8 mm to 200 mm, respectively. By curving each of the lug grooves 31 to 36 in this manner, a force applied to the lug grooves 31 to 36, which are susceptible to damage when braking/driving or when turning, is distributed, and it is thus possible to avoid uneven wear. In particular, the curvature radii RR1 and RR2 are preferably from 50 mm to 160 mm, and the curvature radii RR3, RR4, RR5, and RR6 are preferably from 10 mm to 30 mm. Note that, in the lug grooves 31 to 36, the curvature radii RR1 to RR6 are determined based on center lines of the lug grooves 31 to 36, respectively.

In the above-described pneumatic tire, the first lug grooves 31 and the second lug grooves 32 are disposed alternately along the tire circumferential direction. The second lug grooves 32 and the third lug grooves 33 are disposed alternately along the tire circumferential direction. The third lug grooves 33 and the fourth lug grooves 34 are disposed alternately along the tire circumferential direction. The fourth lug grooves 34 and the fifth lug grooves 35 are disposed alternately along the tire circumferential direction. The fifth lug grooves 35 and the sixth lug grooves 36 are disposed alternately along the tire circumferential direction. By disposing the adjacent lug grooves in a staggered manner as described above, it is possible to make uniform the rigidity balance of the tread portion 1, and as a result, to improve the steering stability on dry road surfaces and avoid uneven wear.

It is preferable that each of the closed ends of the first lug grooves 31 to the sixth lug grooves 36 be curved and the curvature radius of each of the closed ends be from 3 mm to 10 mm. As a result, the force applied to the lug grooves 31 to 36, which are susceptible to damage when braking/driving or when turning, is distributed, and it is thus possible to avoid uneven wear. Here, when the curvature radii of the closed ends of the lug grooves 31 to 36 deviate from the above-described range, forces are locally applied to the lug grooves 31 to 36, and thus, it becomes more likely that the lug grooves 31 to 36 are damaged when braking/driving, or when turning.

The first lug groove 31 and the sixth lug groove 36 are preferably shallower than the second lug groove 32 to the fifth lug groove 35. By making the first lug groove 31 and the sixth lug groove 36 that are positioned in shoulder regions of the tread portion 1 shallower, it is possible to improve the steering stability on dry road surfaces and further to improve the uneven wear resistance. In particular, the groove depths of the first lug groove 31 and the sixth lug groove 36 are preferably set to be 3.5 mm or less.

### Examples

Using pneumatic tires of the tire size 210/650R18, for which a mounting direction with respect to the vehicle is designated, tires for Working Examples 1 to 7 and Comparative Examples 1 to 4 were respectively manufactured. In those tires, as illustrated in FIGS. 1 to 4, the first main groove extending in the tire circumferential direction was provided in the center region of the tread portion, the second main groove extending in the tire circumferential direction was provided in the region further to the inner side of the vehicle than the tire equatorial position of the tread portion, the first to the third ribs were defined in the tread portion, and the first lug grooves to the sixth lug grooves were provided in the tread portion. Further, a position [GL1 / (TL/2) × 100%], the groove width GW1, and the groove depth of the first main groove, a position [GL2 / (TL/2) × 100%], the groove width GW2, and the groove depth of the second main groove, a closed position [RG1 / RL1 × 100%] and the inclination angle α1 of the first lug groove, a closed position [RG2 / RL2 × 100%] and the inclination angle α2 of the second lug groove, a closed position [RG3 / RL3 × 100%] and the inclination angle α3 of the third lug groove, a closed position [RG4 / RL3 × 100%] and the inclination angle α4 of the fourth lug groove, a closed position [RG5 / RL3x 100%] and the inclination angle α5 of the fifth lug groove, a closed position [RG6 / RL3 × 100%] and the inclination angle α6 of the sixth lug groove, and the groove surface area ratio of the tread portion were set as shown in Table 1 and Table 2.

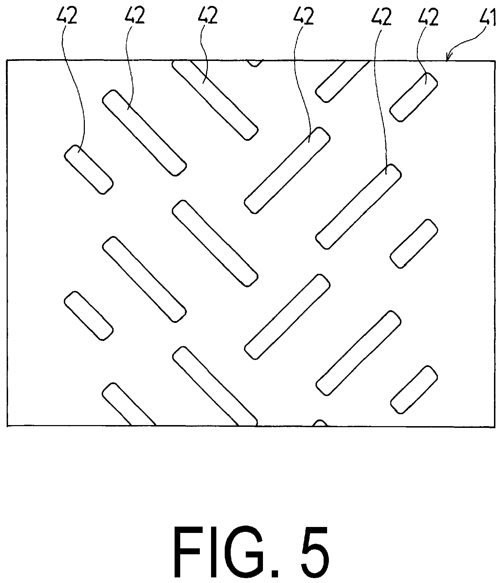

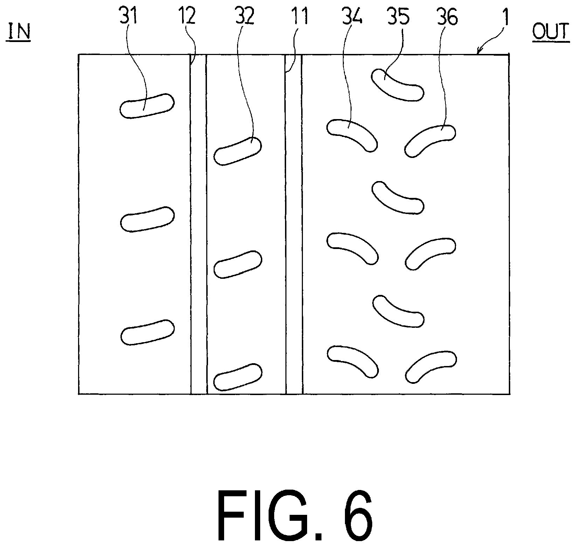

For comparison, as illustrated in FIG. 5, a tire for a Conventional Example 1 was prepared in which a plurality of lug grooves (42) was provided, in a tread portion (41), both ends of which were closed while being inclined with respect to the tire circumferential direction. Further, as illustrated in FIG. 6, a tire for a Comparative Example 5 was prepared that had a similar structure to the Working Example 1 except for the fact that the second lug groove was not communicated with the second main groove and the third lug groove was eliminated in the Comparative Example 5.

Positive values and negative values are stated for the position of the first main groove. The positive values indicate that the first main groove is shifted further to the inner side of the vehicle than the tire equatorial position, and the negative values indicate that the first main groove is shifted further to the outer side of the vehicle than the tire equatorial position.

With respect to these test tires, the dry performance (steering stability, driving time), the uneven wear resistance, and the wet performance (steering stability) were evaluated based on the test method described below, and the evaluation results are shown in Table 1 and Table 2. Each of the evaluations was conducted under conditions in which the test tire was assembled to a wheel having the rim size of 18 × 8JJ and mounted to a four-wheel drive vehicle of 2000 cc displacement, and the air pressure after warm-up was set at 220 kPa.

### Dry performance:

On a paved mountain road occupied for test purposes, driving tests were performed by a test driver. The vehicle was driven over a predetermined section, and the driving time was measured. In addition, the steering stability at that time was evaluated in a sensory manner. The steering stability on dry road surfaces was evaluated on a 10-point scale, with the Conventional Example 1 being evaluated as 5 points. Larger scores indicate superior steering stability on dry road surfaces. With respect to the driving time, the test driving was performed three times, and the best times among them were compared. The evaluation results of the driving time were expressed using a multiplicative inverse, as an index, with the Conventional Example 1 being 100. Larger index values indicate a shorter driving time.

### Uneven wear resistance:

After performing the driving tests by the test driver on the paved mountain road (dry road surface) that was occupied for the test purposes, a degree of uneven wear generated in the tread portion was investigated. With respect to the uneven wear resistance, the degree of uneven wear was evaluated on a 10-point scale (10: Excellent, 9 or 8: Good, 7 or 6: Acceptable, and 5 or less: Not good). Larger evaluation points indicate superior uneven wear resistance.

### Wet performance:

On the paved mountain road (wet road surface) occupied for the test purposes, driving tests were performed by a test driver. The steering stability at that time was evaluated in a sensory manner. The steering stability on wet road surfaces was evaluated on a 10-point scale, with the Conventional Example 1 being evaluated as 5 points. Larger scores indicate superior steering stability on wet road surfaces.

**[Table 1]**

| | | Conventional Example | Working Example | Working Example | Working Example | Working Example | Working Example | Working Example | Working Example |
|---|---|---|---|---|---|---|---|---|---|
| | | 1 | 1 | 2 | 3 | 4 | 5 | 6 | 7 |
| First main groove | Position GL1 / (TL/2) × 100% | - | 0 | 6 | -6 | 0 | 0 | 0 | 0 |
| | Groove width GW1 (mm) | - | 9 | 7 | 14 | 9 | 9 | 9 | 9 |
| | Groove depth (mm) | - | 6 | 5.5 | 7 | 6 | 6 | 6 | 6 |
| Second main groove | Position GL2 / (TL/2) × 100% | - | 50 | 65 | 40 | 50 | 50 | 50 | 50 |
| | Groove width GW2 (mm) | - | 9 | 7 | 14 | 9 | 9 | 9 | 9 |
| | Groove depth (mm) | | 6 | 5.5 | 7 | 6 | 6 | 6 | 6 |
| First lug groove | Closed position [RG1/RL1× 100%] | - | 25 | 25 | 25 | 15 | 35 | 25 | 25 |
| | Inclination angle α1(°) | - | 80 | 80 | 80 | 80 | 80 | 70 | 85 |
| Second lug groove | Closed position [RG2/RL2× 100%] | - | 40 | 40 | 40 | 30 | 65 | 40 | 40 |
| | Inclination angle α2(°) | - | 60 | 60 | 60 | 60 | 60 | 45 | 80 |
| Third lug groove | Closed position [RG3/RL3× 100%] | - | 25 | 25 | 25 | 15 | 35 | 25 | 25 |
| | Inclination angle α3(°) | - | 60 | 60 | 60 | 60 | 60 | 45 | 80 |
| Fourth lug groove | Closed position [RG4/RL3× 100%] | - | 45 | 45 | 45 | 35 | 55 | 45 | 45 |
| | Inclination angle α4(°) | - | 65 | 65 | 65 | 65 | 65 | 50 | 85 |
| Fifth lug groove | Closed position [RG5/RL3× 100%] | - | 70 | 70 | 70 | 65 | 80 | 70 | 70 |
| | Inclination angle α5(°) | - | 65 | 65 | 65 | 65 | 65 | 50 | 85 |
| Sixth lug groove | Closed position [RG6/RL3× 100%] | - | 85 | 85 | 85 | 80 | 95 | 85 | 85 |
| | Inclination angle α6(°) | - | 65 | 65 | 65 | 65 | 65 | 50 | 85 |
| Groove surface area ratio of tread portion (%) | | 17 | 22 | 20 | 25 | 21 | 24 | 22 | 22 |
| Dry performance | Steering stability | 5 | 8 | 9 | 7 | 9 | 7 | 8 | 9 |
| | Driving time | 100 | 103 | 105 | 102 | 105 | 102 | 103 | 105 |
| Uneven wear resistance | | 7 | 8 | 8 | 7 | 9 | 7 | 7 | 9 |
| Wet performance | Steering stability | 5 | 8 | 7 | 9 | 7 | 9 | 9 | 7 |

**[Table 2]**

| | | Comparative Example 1 | Comparative Example 2 | Comparative Example 3 | Comparative Example 4 | Comparative Example 5 |
|---|---|---|---|---|---|---|
| First main groove | Position GL1 / (TL/2) × 100% | 8 | -8 | 8 | -8 | 0 |
| | Groove width GW1 (mm) | 6 | 15 | 6 | 15 | 9 |
| | Groove depth (mm) | 5 | 8 | 5 | 8 | 6 |
| Second main groove | Position GL2 / (TL/2) × 100% | 70 | 35 | 70 | 35 | 50 |
| | Groove width GW2 (mm) | 6 | 15 | 6 | 15 | 9 |
| | Groove depth (mm) | 5 | 8 | 5 | 8 | 6 |
| First lug groove | Closed position [RG1/RL1 ×100%] | 40 | 10 | 25 | 25 | 25 |
| | Inclination angle α1(°) | 90 | 60 | 80 | 80 | 80 |
| Second lug groove | Closed position [RG2/RL2 ×100%] | 20 | 70 | 40 | 40 | 45 |
| | Inclination angle α2(°) | 90 | 40 | 60 | 60 | 60 |
| Third lug groove | Closed position [RG3/RL3 ×100%] | 10 | 40 | 25 | 25 | - |
| | Inclination angle α3(°) | 90 | 40 | 60 | 60 | - |

| | | Comparative Example | Comparative Example | Comparative Example | Comparative Example | Comparative Example |
|---|---|---|---|---|---|---|
| Fourth lug groove | Closed position [RG4/RL3 ×100%] | 1 | 2 | 3 | 4 | 5 |
| | Inclination angle α4(°) | 90 | 40 | 65 | 65 | 65 |
| Fifth lug groove | Closed position [RG5/RL3 ×100%] | 60 | 85 | 70 | 70 | 70 |
| | Inclination angle α5(°) | 90 | 40 | 65 | 65 | 65 |
| Sixth lug groove | Closed position [RG6/RL3 ×100%] | 70 | 98 | 85 | 85 | 85 |
| | Inclination angle α6(°) | 90 | 40 | 65 | 65 | 65 |
| Groove surface area ratio of tread portion (%) | | 16 | 26 | 16 | 26 | 18 |
| Dry performance | Steering stability | 9 | 3 | 8 | 4 | 8 |
| | Driving time | 105 | 94 | 104 | 98 | 103 |
| Uneven wear resistance | | 9 | 4 | 8 | 6 | 8 |
| Wet performance | Steering stability | 3 | 9 | 4 | 8 | 4 |

As can be seen from Table 1 and Table 2, in comparison with the Conventional Example 1, the wet performance, the dry performance, and the uneven wear resistance could be improved in a well-balanced manner in the tires of the Working Examples 1 to 7. The Comparative Examples 1, 3, and 5 had good dry performance and uneven wear resistance, but had inferior wet performance. Further, the Comparative Examples 2 and 4 had good wet performance, but had inferior dry performance and uneven wear resistance.

### Reference Number

1 Tread portion
2 Side wall portion
3 Bead portion
11 First main groove
12 Second main groove
21,22,23 Rib
31,32,33,34,35,36 Lug groove

## Claims

1. A pneumatic tire, for which a mounting direction is designated when the tire is mounted on a vehicle, comprising:
an annular-shaped tread portion (1) extending in a tire circumferential direction; a pair of side wall portions (2) disposed on both sides of the tread portion (1); and a pair of bead portions (3) disposed on an inner side in a tire radial direction of the side wall portions (2),
a first main groove (11) that extends in the tire circumferential direction being provided in a center region of the tread portion (1), a second main groove (12) that extends in the tire circumferential direction being provided in a region further to an inner side of the vehicle than a tire equatorial position of the tread portion (1), a distance (GL1) from a center position of the first main groove (11) to the tire equatorial position being set so as to be 6% or less of a half-width (TL/2) of a tire ground contact width (TL), a distance (GL2) from a center position of the second main groove (12) to the tire equatorial position being set so as to be from 40% to 65% of the half-width TL/2 of the tire ground contact width (TL), a first rib (21) being defined further to the inner side of the vehicle than the second main groove (12), a second rib (22) being defined between the second main groove (12) and the first main groove (11), and a third rib (23) being defined further to an outer side of the vehicle than the first main groove (11), and
a plurality of first lug grooves (31), a plurality of second lug grooves (32), a plurality of third lug grooves (33), a plurality of fourth lug grooves (34), and a plurality of fifth lug grooves (35) being provided in the tread portion (1), each of the first lug grooves (31) being positioned between a ground contact edge on the inner side of the vehicle and the second main groove (12) and both ends thereof being closed within the first rib (21), one end of each of the second lug grooves (32) being communicated with the second main groove (12) and the other end thereof being closed within one of the first rib (21) and the second rib (22), one end of each of the third lug grooves (33) being communicated with the first main groove (11) and the other end thereof being closed within one of the second rib (22) and the third rib (23), each of the fourth lug grooves (34) being positioned between a ground contact edge on the outer side of the vehicle and the first main groove (11) and both ends thereof being closed within the third rib (23), and each of the fifth lug grooves (35) being positioned between the ground contact edge on the outer side of the vehicle and the fourth lug groove (34) and both ends thereof being closed within the third rib (23).

2. The pneumatic tire according to claim 1, wherein
a plurality of sixth lug grooves (36) is provided, each of the sixth lug grooves (36) being positioned between the ground contact edge on the outer side of the vehicle and the fifth lug groove (35) and both ends thereof being closed within the third rib (23).

3. The pneumatic tire according to claim 2, wherein
the second lug grooves (32) and the third lug grooves (33) are open toward the inner side of the vehicle.

4. The pneumatic tire according to claim 3, wherein
a distance RG1 from the second main groove (12) to a closed end of the first lug groove (31) on the tire equator side is set to be from 15% to 35% of a width (RL1) of the first rib (21) within a ground contact region, a distance (RG2) from the second main groove (12) to a closed end of the second lug groove (32) is set to be from 30% to 65% of a width (RL2) of the second rib (22), a distance (RG3) from the first main groove (11) to a closed end of the third lug groove (33) is set to be from 15% to 35% of a width (RL3) of the third rib (23) within the tire ground contact region, a distance RG4 from the first main groove (11) to a closed end of the fourth lug groove (34) on the outer side of the vehicle is set to be from 35% to 55% of the width (RL3) of the third rib (23) within the tire ground contact region, a distance (RG5) from the first main groove (11) to a closed end of the fifth lug groove (35) on the outer side of the vehicle is set to be from 65% to 80% of the width (RL3) of the third rib (23) within the tire ground contact region, and a distance (RG6) from the first main groove (11) to a closed end of the sixth lug groove (36) on the outer side of the vehicle is set to be from 80% to 95% of the width (RL3) of the third rib (23) within the tire ground contact region.

5. The pneumatic tire according to claim 4, wherein
an inclination angle (α1) of the first lug groove (31) with respect to the tire circumferential direction is set to be from 70° to 90°, inclination angles (α2) and (α3) of the second lug groove (32) and the third lug groove (33) with respect to the tire circumferential direction are respectively set to be from 45° to 80°, and inclination angles (α4, α5, and α6) of the fourth lug groove (34), the fifth lug groove (35), and the sixth lug groove (36) with respect to the tire circumferential direction are respectively set to be from 50° to 85°.

6. The pneumatic tire according to any one of claims 1 to 5, wherein
groove widths (GW1) and (GW2) of the first main groove (11) and the second main groove (12) are respectively set to be from 7 mm to 17 mm, and groove depths of the first main groove (11) and the second main groove (12) are respectively set to be from 5.5 mm to 7 mm.

7. The pneumatic tire according to any one of claims 1 to 6, wherein
a groove surface area ratio of the tread portion (1) is in a range from 17% to 27%.

8. The pneumatic tire according to any one of claims 1 to 7, wherein
each of the first lug grooves to the sixth lug grooves (31..36) is curved and a curvature radius of each of the first lug grooves to the sixth lug grooves (31-36) is set to be from 8 mm to 200 mm, respectively.

9. The pneumatic tire according to any one of claims 1 to 8, wherein
the first lug grooves (31) and the second lug grooves (32) are disposed alternately along the tire circumferential direction, the second lug grooves (32) and the third lug grooves (33) are disposed alternately along the tire circumferential direction, the third lug grooves (33) and the fourth lug grooves (34) are disposed alternately along the tire circumferential direction, the fourth lug grooves (34) and the fifth lug grooves (35) are disposed alternately along the tire circumferential direction, and the fifth lug grooves (35) and the sixth lug grooves (36) are disposed alternately along the tire circumferential direction.

10. The pneumatic tire according to any one of claims 1 to 9, wherein
each of the closed ends of the first lug grooves to the sixth lug grooves (31-36) are curved and the curvature radius of each of the closed ends is set to be from 3 mm to 10 mm, respectively.

11. The pneumatic tire according to any one of claims 1 to 10, wherein
the first lug grooves (31) and the sixth lug grooves (36) are respectively shallower than the second lug grooves to the fifth lug grooves (32-35).

## Patentansprüche

1. Luftreifen, für den eine Montagerichtung festgelegt ist, wenn der Reifen an einem Fahrzeug montiert wird, umfassend:
einen ringförmigen Laufflächenabschnitt (1), der sich in einer Reifenumfangsrichtung erstreckt; ein Paar von Seitenwandabschnitten (2), die auf beiden Seiten des Laufflächenabschnitts (1) angeordnet sind; und ein Paar von Reifenwulstabschnitten (3), die auf einer Innenseite in einer Reifenradialrichtung der Seitenwandabschnitte (2) angeordnet sind,
eine erste Hauptrille (11), die sich in der Reifenumfangsrichtung erstreckt, die in einem mittleren Bereich des Laufflächenabschnitts (1) bereitgestellt ist, eine zweite Hauptrille (12), die sich in der Reifenumfangsrichtung erstreckt, die in einem Bereich weiter zu einer Innenseite des Fahrzeugs als eine Reifenäquatorialposition des Laufflächenabschnitts (1) bereitgestellt ist, einen Abstand (GL1) von einer mittleren Position der ersten Hauptrille (11) zur Reifenäquatorialposition, der so eingestellt ist, dass er 6 % oder weniger einer halben Breite (TL/2) einer Reifenbodenkontaktbreite (TL) beträgt,
einen Abstand (GL2) von einer mittleren Position der zweiten Hauptrille (12) zur Reifenäquatorialposition, der so eingestellt ist, dass er von 40 % bis 65 % der halben Breite TL/2 der Reifenbodenkontaktbreite (TL) beträgt, eine erste Rippe (21), die weiter zur Innenseite des Fahrzeugs als die zweite Hauptrille (12) definiert ist, eine zweite Rippe (22), die zwischen der zweiten Hauptrille (12) und der ersten Hauptrille (11) definiert ist, und eine dritte Rippe (23), die weiter zu einer Außenseite des Fahrzeugs als die erste Hauptrille (11) definiert ist, und
eine Mehrzahl von ersten Stollenrillen (31), eine Mehrzahl von zweiten Stollenrillen (32), eine Mehrzahl von dritten Stollenrillen (33), eine Mehrzahl von vierten Stollenrillen (34), und eine Mehrzahl von fünften Stollenrillen (35), die im Laufflächenabschnitt (1) bereitgestellt sind, wobei jede der ersten Stollenrillen (31) zwischen einem Bodenkontaktrand an der Innenseite des Fahrzeugs und der zweiten Hauptrille (12) positioniert ist und beide Enden davon innerhalb der ersten Rippe (21) geschlossen sind, wobei ein Ende von jeder der zweiten Stollenrillen (32) mit der zweiten Hauptrille (12) in Verbindung steht und das andere Ende davon innerhalb einer von der ersten Rippe (21) und der zweiten Rippe (22) geschlossen ist, wobei ein Ende von jeder der dritten Stollenrillen (33) mit der ersten Hauptrille (11) in Verbindung steht und das andere Ende davon innerhalb einer von der zweiten Rippe (22) und der dritten Rippe (23) geschlossen ist, wobei jede der vierten Stollenrillen (34) zwischen einem Bodenkontaktrand an der Außenseite des Fahrzeugs und der ersten Hauptrille (11) positioniert ist und beide Enden davon innerhalb der dritten Rippe (23) geschlossen sind, und wobei jede der fünften Stollenrillen (35) zwischen dem Bodenkontaktrand auf der Außenseite des Fahrzeugs und der vierten Stollenrille (34) positioniert ist und beide Enden davon innerhalb der dritten Rippe (23) geschlossen sind.

2. Luftreifen nach Anspruch 1, wobei
eine Mehrzahl von sechsten Stollenrillen (36) bereitgestellt ist, wobei jede der sechsten Stollenrillen (36) zwischen dem Bodenkontaktrand auf der Außenseite des Fahrzeugs und der fünften Stollenrille (35) positioniert ist und beide Enden davon innerhalb der dritten Rippe (23) geschlossen sind.

3. Luftreifen nach Anspruch 2, wobei
die zweiten Stollenrillen (32) und die dritten Stollenrillen (33) zur Innenseite des Fahrzeugs hin offen sind.

4. Luftreifen nach Anspruch 3, wobei
ein Abstand RG1 von der zweiten Hauptrille (12) zu einem geschlossenen Ende der ersten Stollenrille (31) auf der Reifenäquatorseite eingestellt ist, um von 15 % bis 35 % einer Breite (RL1) der ersten Rippe (21) innerhalb eines Bodenkontaktbereichs zu betragen, ein Abstand (RG2) von der zweiten Hauptrille (12) zu einem geschlossenen Ende der zweiten Stollenrille (32) eingestellt ist, um von 30 % bis 65 % einer Breite (RL2) der zweiten Rippe (22) zu betragen, ein Abstand (RG3) von der ersten Hauptrille (11) zu einem geschlossenen Ende der dritten Stollenrille (33) eingestellt ist, um von 15 % bis 35 % einer Breite (RL3) der dritten Rippe (23) innerhalb des Bodenkontaktbereichs zu betragen, ein Abstand RG4 von der ersten Hauptrille (11) zu einem geschlossenen Ende der vierten Stollenrille (34) auf der Außenseite des Fahrzeugs eingestellt ist, um von 35 % bis 55 % der Breite (RL3) der dritten Rippe (23) innerhalb des Bodenkontaktbereichs zu betragen, ein Abstand (RG5) von der ersten Hauptrille (11) zu einem geschlossenen Ende der fünften Stollenrille (35) auf der Außenseite des Fahrzeugs eingestellt ist, um von 65 % bis 80 % der Breite (RL3) der dritten Rippe (23) innerhalb des Bodenkontaktbereichs zu betragen und ein Abstand (RG6) von der ersten Hauptrille (11) zu einem geschlossenen Ende der sechsten Stollenrille (36) auf der Außenseite des Fahrzeugs eingestellt ist, um von 80 % bis 95 % der Breite (RL3) der dritten Rippe (23) innerhalb des Bodenkontaktbereichs zu betragen.

5. Luftreifen nach Anspruch 4, wobei
ein Neigungswinkel (a1) der ersten Stollenrille (31) in Bezug auf die Reifenumfangsrichtung eingestellt ist, um von 70° bis 90° zu betragen, Neigungswinkel (a2) und (a3) der zweiten Stollenrille (32) und der dritten Stollenrille (33) in Bezug auf die Reifenumfangsrichtung eingestellt sind, um jeweils von 45° bis 80° zu betragen, und Neigungswinkel (a4, a5 und a6) der vierten Stollenrille (34), der fünften Stollenrille (35) und der sechsten Stollenrille (36) in Bezug auf die Reifenumfangsrichtung eingestellt sind, um jeweils von 50° bis 85° zu betragen.

6. Luftreifen nach einem der Ansprüche 1 bis 5, wobei
Rillenbreiten (GW1) und (GW2) der ersten Hauptrille (11) und der zweiten Hauptrille (12) jeweils eingestellt sind, um von 7 mm bis 17 mm zu betragen, und Rillentiefen der ersten Hauptrille (11) und der zweiten Hauptrille (12) jeweils eingestellt sind, um von 5,5 mm bis 7 mm zu betragen.

7. Luftreifen nach einem der Ansprüche 1 bis 6, wobei
ein Rillenoberflächenverhältnis des Laufflächenabschnitts (1) in einem Bereich von 17 % bis 27 % liegt.

8. Luftreifen nach einem der Ansprüche 1 bis 7, wobei
jede von den ersten Stollenrillen bis zu den sechsten Stollenrillen (31..36) gekrümmt ist und ein Krümmungsradius jeder von den ersten Stollenrillen bis zu den sechsten Stollenrillen (31-36) jeweils eingestellt ist, von 8 mm bis 200 mm zu betragen.

9. Luftreifen nach einem der Ansprüche 1 bis 8, wobei
die ersten Stollenrillen (31) und die zweiten Stollenrillen (32) abwechselnd entlang der Reifenumfangsrichtung angeordnet sind, die zweiten Stollenrillen (32) und die dritten Stollenrillen (33) abwechselnd entlang der Reifenumfangsrichtung angeordnet sind, die dritten Stollenrillen (33) und die vierten Stollenrillen (34) abwechselnd entlang der Reifenumfangsrichtung angeordnet sind, die vierten Stollenrillen (34) und die fünften Stollenrillen (35) abwechselnd entlang der Reifenumfangsrichtung angeordnet sind und die fünften Stollenrillen (35) und die sechsten Stollenrillen (36) abwechselnd entlang der Reifenumfangsrichtung angeordnet sind.

10. Luftreifen nach einem der Ansprüche 1 bis 9, wobei
jedes der geschlossenen Enden der ersten Stollenrillen bis zu den sechsten Stollenrillen (31-36) gekrümmt ist, und der Krümmungsradius jedes der geschlossenen Enden eingestellt ist, um jeweils von 3 mm bis 10 mm zu betragen.

11. Luftreifen nach einem der Ansprüche 1 bis 10, wobei
die ersten Stollenrillen (31) und die sechsten Stollenrillen (36) jeweils flacher als die zweiten Stollenrillen bis zu den fünften Stollenrillen (32-35) sind.

## Revendications

1. Pneumatique, pour lequel une direction de montage est désignée lorsque le pneu est monté sur un véhicule, comprenant :
une partie de bande de roulement de forme annulaire (1) s'étendant dans une direction circonférentielle de pneu ; une paire de parties de paroi latérale (2) disposées de part et d'autre de la partie de bande de roulement (1) ; et une paire de parties de talon (3) disposées sur un côté interne dans une direction radiale de pneu des parties de paroi latérale (2),
une première rainure principale (11) qui s'étend dans la direction circonférentielle de pneu, située dans une zone centrale de la partie de bande de roulement (1), une deuxième rainure principale (12) qui s'étend dans la direction circonférentielle de pneu, située dans une zone plus loin vers un côté interne du véhicule qu'une position équatoriale de pneu de la partie de bande de roulement (1), une distance (GL1) allant d'une position centrale de la première rainure principale (11) à la position équatoriale de pneu étant fixée de façon à valoir 6 % ou moins d'une demi-largeur (TL/2) d'une largeur de contact au sol de pneu (TL), une distance (GL2) allant d'une position centrale de la deuxième rainure principale (12) à la position équatoriale de pneu étant fixée de façon à valoir de 40 % à 65 % de la demi-largeur TL/2 de la largeur de contact au sol de pneu (TL), une première nervure (21) étant définie plus loin vers le côté interne du véhicule que la deuxième rainure principale (12), une deuxième nervure (22) étant définie entre la deuxième rainure principale (12) et la première rainure principale (11) et une troisième nervure (23) étant définie plus loin vers un côté externe du véhicule que la première rainure principale (11) et
une pluralité de premières rainures de barrette (31), une pluralité de deuxièmes rainures de barrette (32), une pluralité de troisièmes rainures de barrette (33), une pluralité de quatrièmes rainures de barrette (34) et une pluralité de cinquièmes rainures de barrette (35) étant situées dans la partie de bande de roulement (1), chacune des premières rainures de barrette (31) étant positionnée entre un bord de contact au sol sur le côté interne du véhicule et la deuxième rainure principale (12) et les deux extrémités correspondantes étant fermées au sein de la première nervure (21), une extrémité de chacune des deuxièmes rainures de barrette (32) étant en communication avec la deuxième rainure principale (12) et l'autre extrémité correspondante étant fermée au sein de l'une parmi la première nervure (21) et la deuxième nervure (22), une extrémité de chacune des troisièmes rainures de barrette (33) étant en communication avec la première rainure principale (11) et l'autre extrémité correspondante étant fermée au sein de l'une parmi la deuxième nervure (22) et la troisième nervure (23), chacune des quatrièmes rainures de barrette (34) étant positionnée entre un bord de contact au sol sur le côté externe du véhicule et la première rainure principale (11) et les deux extrémités correspondantes étant fermées au sein de la troisième nervure (23) et chacune des cinquièmes rainures de barrette (35) étant positionnée entre le bord de contact au sol sur le côté externe du véhicule et la quatrième rainure de barrette (34) et les deux extrémités correspondantes de celles-ci étant fermées au sein de la troisième nervure (23).

2. Pneumatique selon la revendication 1,
une pluralité de sixièmes rainures de barrette (36) étant réalisée, chacune des sixièmes rainures de barrette (36) étant positionnée entre le bord de contact au sol sur le côté externe du véhicule et la cinquième rainure de barrette (35) et les deux extrémités correspondantes étant fermées au sein de la troisième nervure (23).

3. Pneumatique selon la revendication 2,
les deuxièmes rainures de barrette (32) et les troisièmes rainures de barrette (33) étant ouvertes en direction du côté interne du véhicule.

4. Pneumatique selon la revendication 3,
une distance RG1 allant de la deuxième rainure principale (12) à une extrémité fermée de la première rainure de barrette (31) sur le côté équatorial de pneu étant fixée pour aller de 15 % à 35 % d'une largeur (RL1) de la première nervure (21) au sein d'une zone de contact au sol, une distance (RG2) allant de la deuxième rainure principale (12) à une extrémité fermée de la deuxième rainure de barrette (32) étant fixée pour aller de 30 % à 65 % d'une largeur (RL2) de la deuxième nervure (22), une distance (RG3) allant de la première rainure principale (11) à une extrémité fermée de la troisième rainure de barrette (33) étant fixée pour aller de 15 % à 35 % d'une largeur (RL3) de la troisième nervure (23) au sein de la zone de contact au sol de pneu, une distance RG4 allant de la première rainure principale (11) à une extrémité fermée de la quatrième rainure de barrette (34) sur le côté externe du véhicule étant fixée pour aller de 35 % à 55 % de la largeur (RL3) de la troisième nervure (23) au sein de la zone de contact au sol de pneu, une distance (RG5) allant de la première rainure principale (11) à une extrémité fermée de la cinquième rainure de barrette (35) sur le côté externe du véhicule étant fixée pour aller de 65 % à 80 % de la largeur (RL3) de la troisième nervure (23) au sein de la zone de contact au sol de pneu et une distance (RG6) allant de la première rainure principale (11) à une extrémité fermée de la sixième rainure de barrette (36) sur le côté externe du véhicule étant fixée pour aller de 80 % à 95 % de la largeur (RL3) de la troisième nervure (23) au sein de la zone de contact au sol de pneu.

5. Pneumatique selon la revendication 4,
un angle d'inclinaison (α1) de la première rainure de barrette (31) par rapport à la direction circonférentielle de pneu étant fixé pour aller de 70° à 90°, des angles d'inclinaison (α2) et (α3) de la deuxième rainure de barrette (32) et de la troisième rainure de barrette (33) par rapport à la direction circonférentielle de pneu étant respectivement fixés pour aller de 45° à 80° et des angles d'inclinaison (α4, α5 et α6) de la quatrième rainure de barrette (34), de la cinquième rainure de barrette (35) et de la sixième rainure de barrette (36) par rapport à la direction circonférentielle de pneu étant respectivement fixés pour aller de 50° à 85°.

6. Pneumatique selon l'une quelconque des revendications 1 à 5,
des largeurs de rainure (GW1) et (GW2) de la première rainure principale (11) et de la deuxième rainure principale (12) étant respectivement fixées pour aller de 7 mm à 17 mm et des profondeurs de rainure de la première rainure principale (11) et de la deuxième rainure principale (12) étant respectivement fixées pour aller de 5,5 mm à 7 mm.

7. Pneumatique selon l'une quelconque des revendications 1 à 6,
un rapport d'aire surfacique de rainure de la partie de bande de roulement (1) étant situé dans une plage de 17 % à 27 %.

8. Pneumatique selon l'une quelconque des revendications 1 à 7,
chacune des premières rainures de barrette aux sixièmes rainures de barrette (31..36) étant courbée et un rayon de courbure de chacune des premières rainures de barrette aux sixièmes rainures de barrette (31 à 36) étant fixé pour aller respectivement de 8 mm à 200 mm.

9. Pneumatique selon l'une quelconque des revendications 1 à 8,
les premières rainures de barrette (31) et les deuxièmes rainures de barrette (32) étant disposées en alternance le long de la direction circonférentielle de pneu, les deuxièmes rainures de barrette (32) et les troisièmes rainures de barrette (33) étant disposées en alternance le long de la direction circonférentielle de pneu, les troisièmes rainures de barrette (33) et les quatrièmes rainures de barrette (34) étant disposées en alternance le long de la direction circonférentielle de pneu, les quatrièmes rainures de barrette (34) et les cinquièmes rainures de barrette (35) étant disposées en alternance le long de la direction circonférentielle de pneu et les cinquièmes rainures de barrette (35) et les sixièmes rainures de barrette (36) étant disposées en alternance le long de la direction circonférentielle de pneu.

10. Pneumatique selon l'une quelconque des revendications 1 à 9,
chacune des extrémités fermées des premières rainures de barrette aux sixièmes rainures de barrette (31 à 36) étant courbée et le rayon de courbure de chacune des extrémités fermées étant fixé pour aller respectivement de 3 mm à 10 mm.

11. Pneumatique selon l'une quelconque des revendications 1 à 10,
les premières rainures de barrette (31) et les sixièmes rainures de barrette (36) étant respectivement plus superficielles que les deuxièmes rainures de barrette aux cinquièmes rainures de barrette (32 à 35).
